# EUROPÄISCHE PATENTSCHRIFT

(11) **EP 4 049 366 B1**
(45) Veröffentlichungstag und Bekanntmachung des Hinweises auf die Patenterteilung: **13.09.2023**
(21) Anmeldenummer: 20800807.8
(22) Anmeldetag: 23.10.2020
(51) Int. Cl.: H02S 20/10, H02S 20/24, H02S 40/36

(54) **PHOTOVOLTAIKMODUL UND PHOTOVOLTAIKANLAGE SOWIE VERFAHREN ZUM BETRIEB EINER SOLCHEN**
PHOTOVOLTAIC MODULE AND PHOTOVOLTAIC SYSTEM, AND METHOD FOR OPERATING SAME
MODULE PHOTOVOLTAÏQUE ET SYSTÈME PHOTOVOLTAÏQUE ET PROCÉDÉ DE FONCTIONNEMENT ASSOCIÉ

(30) Priorität: 24.10.2019 DE 102019128746
(43) Veröffentlichungstag der Anmeldung: 31.08.2022
(73) Patentinhaber: SK SOLAR ENERGY GMBH, 48329 Havixbeck (DE)
(72) Erfinder: KUTSCHER, Stefan, 48149 Münster (DE); SPECHT, Nikolas, 48329 Havixbeck (DE)
(74) Vertreter: Bauer, Dirk
(86) Internationale Anmeldenummer: PCT/EP2020/079959
(87) Internationale Veröffentlichungsnummer: WO 2021/078976

(56) Entgegenhaltungen:
- WO-A1-2018/199752
- DE-U1-202012 000 369
- JP-A- 2005 244 144
- JP-A- 2012 256 728
- US-A1- 2018 367 089

## Beschreibung

Die vorliegende Anmeldung betrifft zunächst ein Photovoltaikmodul zur Umwandlung von Licht in elektrische Energie, umfassend eine Vielzahl von Photovoltaikzellen, wobei zumindest ein Teil der Photovoltaikzellen elektrisch in Reihe geschaltet ist, zwei Modulteile, die jeweils eine Mehrzahl von Photovoltaikzellen umfassen, wobei die Photovoltaikzellen jeweils eines Modulteils untereinander elektrisch in Reihe geschaltet sind und wobei die beiden Modulteile elektrisch parallel geschaltet sind, sodass das Photovoltaikmodul insgesamt einen einzigen elektrischen Pluspol und einen einzigen elektrischen Minuspol aufweist.

Des Weiteren betrifft die Erfindung eine auf einem Untergrund installierte Photovoltaikanlage sowie ein Verfahren zum Betrieb einer solchen.

Photovoltaikmodule der vorstehend beschriebenen Art sind in einer Vielzahl im Stand der Technik bekannt. In aller Regel wird eine Mehrzahl von Photovoltaikmodulen mithilfe von Unterkonstruktionen auf Dächern, wie beispielsweise Flachdächern oder Schrägdächern, von Gebäuden installiert und zu einer Photovoltaikanlage zusammengeschlossen. Typischerweise werden die einzelnen Photovoltaikmodule zur Erzielung einer maximalen Leistung hierbei in Südrichtung orientiert. Um eine zur Verfügung stehende Aufstellfläche auf dem Dach effektiver zu nutzen, sind allerdings auch Photovoltaikanlagen bekannt, bei denen ein Teil der Photovoltaikmodule mithilfe von Unterkonstruktionen in Westrichtung und der andere Teil der Photovoltaikmodule in Ostrichtung orientiert ist, wobei die einzelnen Photovoltaikmodule unter einem Winkel zu der Aufstellfläche aufgeständert sind. Auf Grund der ungünstigeren Orientierung sinkt zwar der spezifische Ertrag pro Modul, gleichzeitig steigt jedoch der Gesamtertrag der Fläche durch die bessere Flächenausnutzung. Der Mehrertrag der besseren Flächenausnutzung übersteigt den Minderertrag durch die ungünstigere Orientierung bei weitem.

In aller Regel werden die Photovoltaikzellen der in Ostrichtung orientierten Photovoltaikmodule sowie die der in Westrichtung orientierten Photovoltaikmodule jeweils elektrisch in Reihe geschaltet. Dies liegt darin begründet, dass infolge der Ausrichtung prinzipbedingt eine Bestrahlung der in Westausrichtung orientieren Photovoltaikmodule immer mit einer Abschattung der in Ostausrichtung orientieren Photovoltaikmodule - und umgekehrt - einhergeht. Folge ist ein Stromabfall in den abgeschatteten Photovoltaikzellen, welcher infolge einer Reihenschaltung zwischen den einzelnen Photovoltaikzellen mithin auch zu einer verringerten Leistung der Photovoltaikanlage führen würde. Es versteht sich, dass es eine gemeinsame Reihenschaltung der in Westausrichtung orientierten und der in Ostausrichtung orientierten Photovoltaikzellen somit in jedem Fall zu vermeiden gilt. Aus diesem Grund werden die in Westrichtung orientierten Photovoltaikzellen typischerweise getrennt von den in Ostrichtung orientierten Photovoltaikzellen elektrisch in Reihe geschaltet, sodass die in Ostrichtung orientierten Photovoltaikzellen unabhängig von den in Westrichtung orientierten Photovoltaikzellen wirken können.

Ebenfalls ist dieses Problem bekannt bei Photovoltaikmodulen, welche in Südrichtung orientiert sind. Kommt es beispielsweise aufgrund eines Schattenwurfes eines Baumes oder eines benachbarten Gebäudes zu einer teilweisen Abschattung einiger Photovoltaikzellen führt dieser zu einer Verringerung der Leistung des gesamten Photovoltaikmoduls. Um dieser Verschattungswirkung entgegenzuwirken, werden sogenannte Bypass-Dioden in das Modul eingebracht die typischerweise Gruppen von 20 Photovoltaikzellen umgehen können.

Aufgrund der anspruchsvollen Verkabelung der einzelnen Photovoltaikmodule untereinander sowie aufgrund eines erhöhten Arbeitsaufwandes bei einem Aufbau der Unterkonstruktionen wird bei einer Installation der Photovoltaikanlage in aller Regel geschultes Fachpersonal benötigt. Daraus ergibt sich, dass die Installation der Photovoltaikanlage somit mit hohen Personalkosten verbunden ist. Ferner können sich auch die Unterkonstruktionen selbst als nachteilig erweisen, da diese aufgrund ihres Eigengewichts eine zusätzliche Belastung für die Statik des Gebäudes darstellen. Darüber hinaus kommt es trotz des Fachpersonals häufig zu einer Falschverkabelung der einzelnen Photovoltaikmodule. Insbesondere werden hierbei in Westausrichtung orientierte Photovoltaikmodule unbeabsichtigt elektrisch mit in Ostausrichtung orientierten Photovoltaikmodulen verschaltet. Folge ist eine wie eingangs beschriebene Verringerung des spezifischen Ertrags der Photovoltaikanlage. Aufgrund der Mehrzahl in der Photovoltaikanlage verwendeten Photovoltaikmodule, welche ihrerseits wiederum eine Vielzahl von Photovoltaikzellen aufweisen, hat sich ein Auffinden des verantwortlichen Verkabelungsfehlers im Nachhinein als mühsam und zeitaufwendig herausgestellt.

Die DE 20 2012 000 369 U1 beschreibt eine Photovoltaikanlage gemäß der eingangs beschriebenen Art. Die Photovoltaikanlage besteht aus einer Vielzahl von Photovoltaikmodulen, die jeweils eine aus Kunststoff hergestellten Stützeinrichtung aufweisen. Auf jeder Stützeinrichtung ist ein nach Westen und ein nach Osten ausgerichtetes Photovoltaikmodul angeordnet. Es ist vorgesehen, dass die Photovoltaikmodule jeweils mit zwei Polen zur Herstellung einer elektrischen Verbindung versehen werden, welche die nach Westen und die nach Osten ausgerichteten Photovoltaikmodule elektrisch separat miteinander verketten. Wie zuvor bereits erläutert, ist eine derartig separate Verschaltung zwischen Ost und West erforderlich, um einer verringerten Leistung der Photovoltaikanlage entgegen zu wirken, da die Photovoltaikmodule je nach ihrer Ausrichtung zur Sonne unterschiedlich viel Strom liefern.

Ein eingangs beschriebenes Photovoltaikmodul geht ebenfalls aus der Patentanmeldung DE 10 2013 211 179 A1 hervor. Hier wird ein eine Vielzahl von Photovoltaikzellen aufweisendes Photovoltaikmodul beschrieben, bei dem jeweils eine Hälfte der Photovoltaikzellen elektrisch in Reihe geschaltet ist. Ferner beschreibt das Dokument ein System bestehend aus mindestens zwei Photovoltaikmodulen. Hierbei wird die erste Hälfte der Photovoltaikzellen des ersten Photovoltaikmoduls, die untereinander in Reihe geschaltet sind, mit der ersten Hälfte der Photovoltaikzellen des zweiten Photovoltaikmodul, die ebenfalls in Reihe geschaltet sind, elektrisch in Reihe geschaltet. Insgesamt wird hierdurch eine erste Systemreihenschaltung ausgebildet. Analog werden die zweiten Hälften der Photovoltaikmodule zu einer zweiten Systemreihenschaltung verschaltet. Anschließend werden die beiden Systemreihenschaltungen entweder wiederum elektrisch in Reihe oder elektrisch parallel geschaltet.

Auch diese bekannte Photovoltaikanlage weist den Nachteil auf, dass im Zuge der Reihenverschaltung der Photovoltaikmodule eine Falschverkabelung auftreten kann, inklusive der vorstehend beschriebenen negativen Konsequenzen.

Die Komponenten einer Photovoltaikanlage sind in der Regel für die höchste Spitzenauslastung ausgelegt, die jedoch üblicherweise nur selten auftritt. Die Kosten einer Photovoltaikanlage werden dadurch unnötig in die Höhe getrieben, weshalb die in der DE 10 2013 016 018 A1 dargestellte Photovoltaikanlage einen "Reduced-Output-Mode" vorsieht, mittels dessen ein Teil der Modulstrings innerhalb eines Photovoltaikmoduls ausgeschaltet werden kann. Infolgedessen ist es nicht mehr erforderlich sämtliche Komponenten der Photovoltaikanlage für die Spitzenauslastung auszulegen, sodass eine kostengünstigere Herstellung von Photovoltaikanlagen ermöglicht wird.

Die in der DE 10 2009 060 604 A1 dargestellten Photovoltaikmodule zeichnen sich dadurch aus, dass Zellen auf einer großflächigen, elektrisch isolierenden Leiterplatte aufgebracht sind, um Überleitungsverluste zu minimieren.

Bifaciale Photovoltaikmodule besitzen bifaciale Zellen, die sich dadurch auszeichnen, dass sie sowohl mit ihrer Vorderseite als auch mit ihrer Rückseite einfallendes Licht auffangen können. Das in der US 2014/0130842 A1 dargestellte bifaciale Photovoltaikmodul besteht aus mehreren Zellstrings, wobei die Zellen eines jeweiligen Zellstrings in Reihe geschaltet sind, wohingegen die jeweiligen Zellstrings parallel zueinander verschaltet sein können. Eine vertikale Ost-West-Ausrichtung des bifacialen Photovoltaikmoduls macht sich die Eigenschaft zunutze, dass die Photovoltaikzellen sowohl Licht aus Ostrichtung als auch aus Westrichtung einfangen können. Dazu wird das Photovoltaikmodul senkrecht zu einem Untergrund aufgestellt.

In der US 2018/0367089 wird ein Photovoltaikmodul dargestellt, welches Solarzellen in Form von Dünnschichtzellen auf einem vorgeformten Ständerwerk aufweist. Aufgrund der Verwendung von Dünnschichtzellen kann eine serielle oder parallele Verschaltung der Photovoltaikmodule untereinander flexibel gewählt werden.

Die in der WO 2018/199752 A1 beschriebene Photovoltaikanlage umfasst nach Osten und nach Westen ausgerichtete Solarzellen. Hierzu ist es vorgesehen, dass zwei einzelne Photovoltaikmodule mittels eines Scharniers miteinander verbunden und in einem Winkel zueinander aufgestellt werden.

Sowohl die JP 2012 256 728 als auch die JP 2005 244 144 zeigen flache Photovoltaikmodule jeweils bestehend aus zwei Modulteilen sowie einer Anschlussbox. Die beiden Modulteile können je nach Anwendungsgebiet in Serie oder in Reihe miteinander verschaltet werden. Hierzu ist in der JP 2012 256 728 ein Schalter vorgesehen, wohingegen bei der JP 2005 244 144 eine Positionsänderung einer Schraube vorgesehen ist, um ein Wechsel der Schaltung zu bewirken.

### Aufgabe

Es ist daher Aufgabe der vorliegenden Erfindung, ein Photovoltaikmodul bereitzustellen, das sich durch eine besonders einfache Installation auszeichnet. Diese Aufgabe soll analog für die erfindungsgemäße Photovoltaikanlage und das erfindungsgemäße Verfahren erfüllt werden.

### Lösung

Die vorstehende Aufgabe wird erfindungsgemäß mittels eines Photovoltaikmoduls mit den Merkmalen des Anspruchs 1 gelöst. Vorteilhafte Ausgestaltungen ergeben sich aus den zugehörigen Unteransprüchen.

Das erfindungsgemäße Photovoltaikmodul ist dadurch gekennzeichnet, dass die Modulteile derart relativ zueinander angeordnet sind, dass Modulebenen der beiden Modulteile gemeinsam einen Winkel zwischen 140° und 170° einschließen.

Die beiden Modulebenen der beiden Modulteile schließen gemeinsam einen Winkel zwischen 140° und 170° ein. Im Sinne der vorliegenden Anmeldung heißt dies, 140° < Winkel < 170°. Der Winkel zwischen den beiden Modulebenen der beiden Modulteile ist entsprechend größer als 140° und kleiner als 170°.

Das erfindungsgemäße Photovoltaikmodul weist vorzugsweise einen Knick auf, so dass die beiden Modulteile auf sich gegenüberliegenden Seiten des Knicks angeordnet sind und deren Modulebenen gemeinsamen einen Winkel kleiner 170° und größer 140° einschließen. Der Knick ist vorzugsweise in eine von einem Untergrund abgewandte Richtung angeordnet. Der Knick verläuft vorteilhafterweise entweder senkrecht oder parallel zu einer Längsachse des Photovoltaikmoduls.

Eine besonders vorteilhafte Ausgestaltung der Erfindung sieht vor, dass die Photovoltaikzellen beider Modulteile in Summe der Anzahl der Photovoltaikzellen eines Photovoltaikmoduls entsprechen. Die gesamte Anzahl der Photovoltaikzellen richtet sich dabei vorteilhafterweise nach der Anzahl der Photovoltaikzellen, der auf dem Markt gängigen Photovoltaikmodule. Mit anderen Worten ist das erfindungsgemäße Photovoltaikmodul vorzugsweise mittig geknickt, wobei die dadurch entstehenden Modulteile jeweils einem halben Photovoltaikmodul entsprechen.

Das erfindungsgemäße Photovoltaikmodul hat viele Vorteile. Ein besonderer Vorteil besteht darin, dass eine Ost-West-Ausrichtung des einzelnen Photovoltaikmoduls aufgrund der relativ zueinander angeordneten Modulteile, deren Modulebenen gemeinsam einen Winkel zwischen 140° und 170°einschließen, umzusetzen ist. Dies liegt insbesondere darin begründet, dass bei einer Ausrichtung des einen Modulteils in Westrichtung automatisch eine Ausrichtung des entsprechend anderen Modulteils in Ostrichtung erfolgt. Das Photovoltaikmodul ist dadurch besonders einfach installierbar.

Weiterhin ist das Photovoltaikmodul dadurch einfach installierbar, dass das Photovoltaikmodul lediglich einen einzigen elektrischen Pluspol und einen einzigen elektrischen Minuspol aufweist. Hierdurch lässt sich das erfindungsgemäße Photovoltaikmodul mittels seiner elektrischen Pole einfach elektrisch mit einem weiteren Photovoltaikmodul oder mittelbar mit einem zu versorgenden Stromnetz verbinden.

Ferner ist es aufgrund der Parallelschaltung zwischen den beiden einzelnen Modulteilen des jeweiligen Photovoltaikmoduls nicht länger nötig, in Westrichtung orientierte Modulteile und in Ostrichtung orientierte Modulteile getrennt voneinander elektrisch zu verschalten. In vorteilhafterweise wird hierdurch eine Fehleranfälligkeit bei der Installation derartig ausgerichteter Photovoltaikmodule somit im Vergleich zum Stand der Technik reduziert.

Vorteilhafterweise ist das Photovoltaikmodul selbsttragend ausgebildet. Dies bietet den Vorteil, dass die erfindungsgemäßen Photovoltaikmodule somit ohne Unterkonstruktionen, wie sie aus dem Stand der Technik bekannt sind, platzsparend auf einem Untergrund, beispielsweise einem Flachdach eines Gebäudes, aufgestellt werden können. Folglich kann das Photovoltaikmodul als Ganzes auf den Untergrund aufgestellt und derart angeordnet werden, dass unmittelbar eine Ost-West-Ausrichtung gegeben ist. Dies bietet den Vorteil, dass die Arbeitszeit deutlich reduziert werden kann, da Arbeitsschritte eingespart werden. Aufgrund der fehlenden Unterkonstruktion kann ferner Gewicht eingespart werden.

Bestenfalls kann auf eine Verschraubung der Photovoltaikmodule verzichtet werden, wenn keine Unterkonstruktion vorhanden ist.

Gemäß der vorliegenden Anmeldung ist vorgesehen, dass sowohl die Photovoltaikzellen der in Ostrichtung als auch die Photovoltaikzellen der in Westrichtung ausgerichteten Modulteile jeweils gemeinsam einen getrennten Zellstring bilden. Vorzugsweise sind die Zellstrings beider Modulteile gleich lang. Es hat sich als vorteilhaft herausgestellt, wenn die Photovoltaikzellen eines Zellstrings identisch sind. In Reihe geschaltete Photovoltaikmodule bilden im Sinne der vorliegenden Anmeldung einen Modulstring.

Es ist gemäß einer vorteilhaften Ausgestaltung der Erfindung vorgesehen, dass die Photovoltaikzellen eines jeweiligen Modulteils von Vollzellen oder von Halbzellen gebildet sind. Die Abmessungen der Vollzellen oder der entsprechenden Halbzellen richten sich dabei nach dem im Stand der Technik gängigen Abmessungen. Vorzugsweise können Abmessungen der jeweiligen Halbzellen vorzugsweise 156 mm × 78 mm und Abmessungen der jeweiligen Vollzellen 156 mm × 156 mm betragen.

Die Nutzung von Vollzellen innerhalb der verschiedenen Module bringt den Vorteil mit sich, dass die Anzahl der benötigten elektrischen Leitungen zum Anschluss eines Modulstrings an einen Wechselrichter - und damit zur Einspeisung des erzeugten Stroms in ein Stromnetz - reduziert werden können. Dies lässt sich damit begründen, dass die Anzahl an Photovoltaikmodulen innerhalb eines Modulstrings vergrößert und somit die Anzahl der Modulstrings, die mit dem Wechselrichter verbunden werden, verringert wird. Vorzugsweise kann die Anzahl der Photovoltaikmodule innerhalb eines Modulstrings im Gegensatz zu den aus dem Stand der Technik bekannten Modulstrings verdoppelt und somit die Anzahl der Modulstrings halbiert werden, so dass die Anschlussleitungen zwischen Modulstring und Wechselrichter halbiert werden. Der Anschluss des Modulstrings an einen Wechselrichter soll hier lediglich exemplarisch sein, denn es ist nicht zwingend erforderlich, dass ein Modulstring unmittelbar mit einem Wechselrichter verbunden wird. Zwischen einem Modulstring und dem Wechselrichter können noch weitere Geräte geschaltet sein, die zur Einspeisung des Stroms oder zur Regelung des Photovoltaikmoduls eingesetzt werden.

Es ist bekannt, dass der Einsatz von Halbzellen bei Photovoltaikmodulen zu einer Erhöhung der spezifischen Leistung führt. Allerdings führt eine Reihenschaltung der Halbzellen innerhalb eines Photovoltaikmoduls zu einer Halbierung des Nennstroms und einer Verdopplung der Nennspannung. Um diesem Problem entgegenzuwirken ist erfindungsgemäß vorgesehen, dass die Photovoltaikmodule aus jeweils zwei Halbzellen aufweisende Modulteile, die parallel miteinander verschaltet sind, bestehen. Die Verwendung von Halbzellen in diesen Photovoltaikmodulen bringt zudem den Vorteil mit sich, dass der Querschnitt der im Stand der Technik zwischen den einzelnen Photovoltaikmodulen und zwischen Modulstring und Wechselrichter, verwendeten elektrischen Leitungen reduziert werden kann. Der Wechselrichter soll auch in diesem Fall nur exemplarisch sein, da zwischen einem Modulstring und dem Wechselrichter noch weitere Geräte geschaltet sein können. Die Verwendung einer elektrischen Leitung mit einem verringerten Durchmesser ist deshalb machbar, weil die gesamte Stromstärke, die aus den in Ostrichtung und Westrichtung ausgerichteten Modulteilen hervorgeht, nicht mehr die gleiche Stromstärke erreicht, wie die aus dem Stand der Technik bekannten Photovoltaikmodulen mit einer Ausrichtung.

Typischerweise werden zur elektrischen Verbindung der Photovoltaikmodule elektrische Leitungen aus Kupfer verwendet, deren Anschaffung bekanntermaßen mit hohen Kosten verbunden ist. Der Querschnitt der elektrischen Leitungen innerhalb einer Photovoltaikanlage mit Halbzellen lässt sich gegenüber dem Querschnitt der elektrischen Leitungen einer Photovoltaikanlage mit Vollzellen deutlich reduzieren. Bevorzugter Weise weisen die Kupferkabel zur Verbindung der erfindungsgemäßen Photovoltaikmodule bei der Verwendung von Halbzellen einen Querschnitt zwischen 3,5 mm² bis 4,5 mm², vorzugsweise einen Querschnitt von 4 mm² und bei Vollzellen einen Querschnittzwischen 5,5 mm² und 6,5 mm², vorzugsweise einen Querschnitt von ca. 6 mm² auf. Andere Querschnitte sind ebenso denkbar und sind von den zu überbrückenden Abständen abhängig.

Gemäß einer vorzugsweisen Ausgestaltung der Erfindung ist vorgesehen, dass die Modulteile jeweils eine gleiche Anzahl von Photovoltaikzellen umfassen. Insbesondere im Hinblick auf eine Orientierung des Photovoltaikmoduls in der Art, dass das erste Modulteil in Westausrichtung orientiert ist, während das zweite Modulteil in Ostausrichtung orientiert ist, hat es sich als besonders vorteilhaft erwiesen, die Photovoltaikzellen hälftig auf die beiden Modulteilen zu verteilen. Hierdurch kann sichergestellt werden, dass beide Modulteile eine ähnliche Nennspannung aufweisen und keine Ausgleichsströme auftreten.

Eine Ausgestaltung der Erfindung sieht vor, dass eine Anzahl der verwendeten Halbzellen oder Vollzellen in dem Photovoltaikmodul einer gängigen in der Zell- und Photovoltaikmodulherstellung verwendeten Anzahl entspricht. Vorzugsweise weist das jeweilige Modulteil 60 Halbzellen oder 30 Vollzellen auf. Andere Mengen, wie beispielsweise 72 Halbzellen, respektive 36 Vollzellen pro Modulseite, sollen jedoch im Rahmen der Erfindung nicht ausgeschlossen sein. Diese Standardisierung ist insoweit wünschenswert, als dass sich hierdurch bekannte Herstellungs- und Installationsschritte analog anwenden lassen. Die Verwendung von 60 Halbzellen oder 30 Vollzellen ist somit auch im Hinblick auf eine Herstellung des erfindungsgemäßen Photovoltaikmoduls besonders vorteilhaft, da hierdurch standardisierte Modulteile eingesetzt werden können.

Vorzugsweise ist vorgesehen, dass die Modulteile entlang einer Mittelachse des Photovoltaikmoduls einander zugeordnet sind, vorzugsweise aneinander grenzen. Vorteilhafterweise lässt sich das Photovoltaikmodul somit besonders platzsparend herstellen. Dies ist insbesondere im Hinblick auf eine optimale Nutzung der zur Verfügung stehenden Aufstellfläche besonders vorteilhaft, da hierdurch die Anzahl der aufzustellenden Photovoltaikmodule erhöht werden kann.

Dabei ist es gemäß einer weiteren Ausgestaltung der Erfindung vorgesehen, dass das Photovoltaikmodul symmetrisch bezogen auf die Mittelachse ausgebildet ist. Insbesondere auf Grund der elektrischen Rahmenbedingungen (Parallelschaltung beider Modulteile) hat sich die symmetrische Aufteilung als besonders vorteilhaft erwiesen. Auch im Hinblick auf eine konstante Leistung des Photovoltaikmoduls während eines Tagesverlaufs hat sich eine symmetrische Ausbildung des Photovoltaikmoduls als besonders vorteilhaft erwiesen. Ferner bietet dies den Vorteil, dass die Modulteile als solche identisch hergestellt werden können.

Als besonders vorteilhaft hat es sich in Simulationen zu einer optimalen Orientierung der Modulteile erwiesen, wenn der Winkel, den die beiden Modulteile gemeinsam einschließen, in einem Bereich zwischen 150° und 160°, liegt.

Eine besonders vorteilhafte Weiterentwicklung des erfindungsgemäßen Photovoltaikmoduls sieht vor, dass die beiden Modulteile unlösbar miteinander verbunden sind, wobei das Photovoltaikmodul vorzugsweise einteilig ausgestaltet ist.

Dies führt dazu, dass sich selbiges besonders einfach transportieren lässt. Insbesondere sind - neben der Verkabelung - keine weiteren Montageschritte nötig, um das Photovoltaikmodul in Betrieb zu nehmen. Hierdurch lässt sich das Photovoltaikmodul besonders einfach und schnell installieren, indem die Pole des Photovoltaikmoduls entweder mit den Polen eines weiteren Photovoltaikmoduls oder mittelbar mit denen eines Stromnetzes elektrisch verbunden werden.

Es ist gemäß einem weiteren Merkmal der Erfindung vorgesehen, dass das Photovoltaikmodul einen einstückigen Rahmen aufweist, mittels dessen beide Modulteile gemeinsam gelagert sind. Das Photovoltaikmodul umfasst vorzugsweise die beiden Modulteile sowie den Rahmen. Vorteilhafterweise weist der Rahmen einen Knick mit einem Winkel zwischen 0° und 180° auf. Der Winkel wird vorzugsweise bereits bei der Fertigstellung des Photovoltaikmoduls festgelegt, so dass das Photovoltaikmodul komplett fertiggestellt an den Aufstellungsort geliefert werden kann.

Vorteilhafterweise ist der Rahmen des Photovoltaikmoduls selbsttragend ausgeführt. Dies bietet den Vorteil, dass keine Unterkonstruktion erforderlich ist, um ein jeweiliges Photovoltaikmodul auf einer Aufstellfläche aufzustellen.

Die eingangs benannte Aufgabe wird ferner ausgehend von einer Photovoltaikanlage mit den Merkmalen des Anspruchs 9 gelöst.

Die erfindungsgemäße Photovoltaikanlage eignet sich zur Installation auf einem Untergrund und umfasst eine Mehrzahl der vorstehend beschriebenen, erfindungsgemäßen Photovoltaikmodulen, wobei die Photovoltaikmodule zwei Modulteile aufweisen, wobei die Photovoltaikmodule jeweils einteilig ausgestaltet ausgeformt sind, wobei ein Teil der Modulteile der Photovoltaikmodule zumindest im Wesentlichen, vorzugsweise vollständig, in einer Westausrichtung und der andere Teil der Modulteile zumindest im Wesentlichen, vorzugsweise vollständig, in einer Ostausrichtung orientiert ist. Dabei sind ein jeweilig in Westausrichtung orientiertes Modulteil sowie das zugehörige in Ostausrichtung orientierte Modulteil eines jeweiligen Photovoltaikmoduls elektrisch parallel geschaltet. Die Photovoltaikmodule sind ihrerseits elektrisch in Reihe geschaltet, sodass die Photovoltaikanlage insgesamt einen einzigen elektrischen Pluspol und einen einzigen elektrischen Minuspol aufweist.

Vorzugsweise sind die Modulteile unlösbar miteinander verbunden.

Eine besonders vorteilhafte Ausgestaltung der Erfindung sieht vor, dass das Photovoltaikmodul starr ausgeformt ist. Das heißt, dass der Winkel am Aufstellungsort selbst nicht mehr veränderbar ist. Das Photovoltaikmodul wird komplett vorgefertigt und einsatzbereit an den Aufstellungsort geliefert.

Die in Bezug auf das erfindungsgemäße Photovoltaikmodul genannten Vorteile werden analog mittels der vorstehenden Photovoltaikanlage erzielt. Insbesondere lässt sich die Photovoltaikanlage besonders schnell und einfach installieren. Hierzu ist es lediglich nötig, die einzelnen Photovoltaikmodule untereinander elektrisch in Reihe zu verschalten, wobei es nicht weiter notwendig ist, zwischen in Westausrichtung und in Ostausrichtung orientierten Photovoltaikmodulen zu unterscheiden. Durch letzteres bedingte Fehlverkabelungen, die im Stand der Technik regelmäßig zu beklagen sind, entfallen daraufhin. Hinzu kommt, dass die Photovoltaikmodule einer in Ost- West-Richtung ausgelegten Photovoltaikanlage als Ganzes auf einen Untergrund, beispielsweise einem Flachdach, aufgestellt werden können. Die Arbeitszeit auf dem Untergrund kann dadurch deutlich reduziert werden, da beispielsweise auf umständliche Unterkonstruktionen, Verschraubungen und ähnliches verzichtet werden kann.

Gegenüber den aus dem Stand der Technik bekannten Photovoltaikanlagen, die lediglich eine Südausrichtung aufweisen, kann anders als sich zunächst vermuten lässt, mittels der erfindungsgemäßen Photovoltaikanlage immerhin ein ähnlicher Ertrag erzielt werden. Dies lässt sich unter anderem damit begründen, dass der Zeitraum über den eine Sonneneinstrahlung auf die jeweiligen Photovoltaikmodule stattfindet, verlängert werden kann. Hinzu kommt, dass die Ost-West-Ausrichtung eine größere Flächendichte der einzelnen Photovoltaikmodule zulässt. Denn die in Südausrichtung ausgerichteten Module müssen in einem größeren Abstand zueinander angeordnet werden, als dies bei der Ost-West-Ausrichtung der Fall ist, um eine gegenseitige Verschattung zu vermeiden.

Gemäß einem weiteren Merkmal der Erfindung ist vorgesehen, dass die Photovoltaikanlage mindestens einen Wechselrichter und mindestens einen MPP Tracker aufweist. Mittels des Wechselrichters lässt sich die von dem Photovoltaikmodul erzeugte Gleichspannung in Wechselspannung umwandeln, um den von den Photovoltaikzellen erzeugten Strom in das Stromnetz eines Gebäudes oder ein öffentliches Netz einspeisen zu können. Mittels des MPP Trackers wird sichergestellt, dass die Photovoltaikanlage unter unterschiedlichsten Rahmenbedingungen, beispielsweise aufgrund einer Bewölkung oder äußeren Temperatureinflüssen, im maximalen Leistungspunkt arbeitet. Aufgrund der elektrisch parallelen Verschaltung der beiden Modulteile kann die Anzahl der MPP Tracker reduziert werden, um die verschieden orientierten Photovoltaikzellen zu betreiben. Insbesondere lassen sich hierdurch Kosten für weitere Wechselrichter, MPP Tracker sowie für eine zusätzliche Verkabelung einsparen. Typischerweise sind mehrere Modulstrings parallel zueinander an einen MPP Tracker geschaltet, wobei entweder einer oder mehrere MPP Tracker einem Wechselrichter zugeordnet sein können. Die Anzahl der verwendeten MPP Tracker und der Wechselrichter werden je nach Auslegung der Photovoltaikanlage bestimmt.

Gemäß einer vorzugsweisen Ausgestaltung der Erfindung sind benachbarte Photovoltaikmodule der Photovoltaikanlage mittels einer einzigen elektrischen Leitung elektrisch miteinander verbunden. Das heißt, dass ein Photovoltaikmodul, in dem das Ostmodulteil mit dem Westmodulteil parallel geschaltet ist, in Reihe mit einem benachbarten Photovoltaikmodul, bei dem ebenfalls, der Ostmodulteil und Westmodulteil parallel geschaltet sind, geschaltet ist. Insbesondere ist es nicht weiter notwendig, die verschiedenen orientierten Photovoltaikmodule getrennt voneinander elektrisch mit dem MPP-Tracker und damit dem Wechselrichter zu verbinden. Wie zuvor bereits dargestellt, kann so bei der Verwendung der Vollzellen die Anzahl der elektrischen Leitungen, die einen Modulstring mit dem MPP Tracker oder Wechselrichter verbinden, reduziert, vorzugsweise halbiert werden, da mehr Photovoltaikmodule hintereinander geschaltet werden können als üblich, so dass sich die Anzahl der Modulstrings verringert. Bei der Verwendung von Halbzellen können vorzugsweise dünnere elektrische Leitungen eingesetzt werden.

Die eingangs benannte Aufgabe wird ferner ausgehend von einem Verfahren zum Betrieb einer Photovoltaikanlage mit den Merkmalen des Anspruchs 12 gelöst.

Das erfindungsgemäße Verfahren ist dadurch gekennzeichnet, dass ein maximaler Leistungspunkt der Photovoltaikanlage mittels eines einzigen MPP Trackers ermittelt und ein Betriebspunkt der Photovoltaikanlage entsprechend dem ermittelten maximalen Leistungspunkt eingestellt wird.

Vergleichbar zu der erfindungsgemäße Photovoltaikanlage liegt ein Vorteil des Verfahrens darin, dass sich mittels des erfindungsgemäßen Verfahrens Kosten einsparen lassen, da lediglich ein einziger MPP Tracker für sämtliche Photovoltaikzellen, das heißt sowohl solche in Westausrichtung als auch solche in Ostausrichtung, benötigt wird. Insbesondere müssen verschieden orientierte Photovoltaikmodule nicht unabhängig voneinander eingestellt werden, wodurch sich ferner Kosten für elektrische Leitungen zur Verbindung der einzelnen Photovoltaikmodule mit dem MPP Tracker einsparen lassen.

### Ausführungsbeispiele

Die Erfindung ist nachstehend anhand zweier Ausführungsbeispiele, die in den Figuren dargestellt sind, näher erläutert. Es zeigt:
- Fig. 1:: eine Draufsicht eines erfindungsgemäßen Photovoltaikmoduls,
- Fig. 2:: einen vertikalen Schnitt durch das Photovoltaikmodul aus Figur 1,
- Fig. 3:: eine Draufsicht einer erfindungsgemäßen Photovoltaikanlage und
- Fig. 4:: eine Draufsicht einer erfindungsgemäßen Photovoltaikanlage in einer zweiten Ausführung.

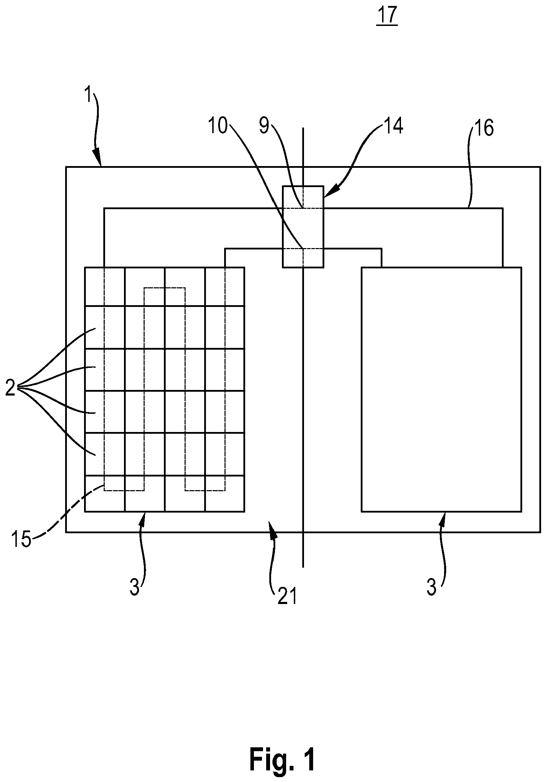

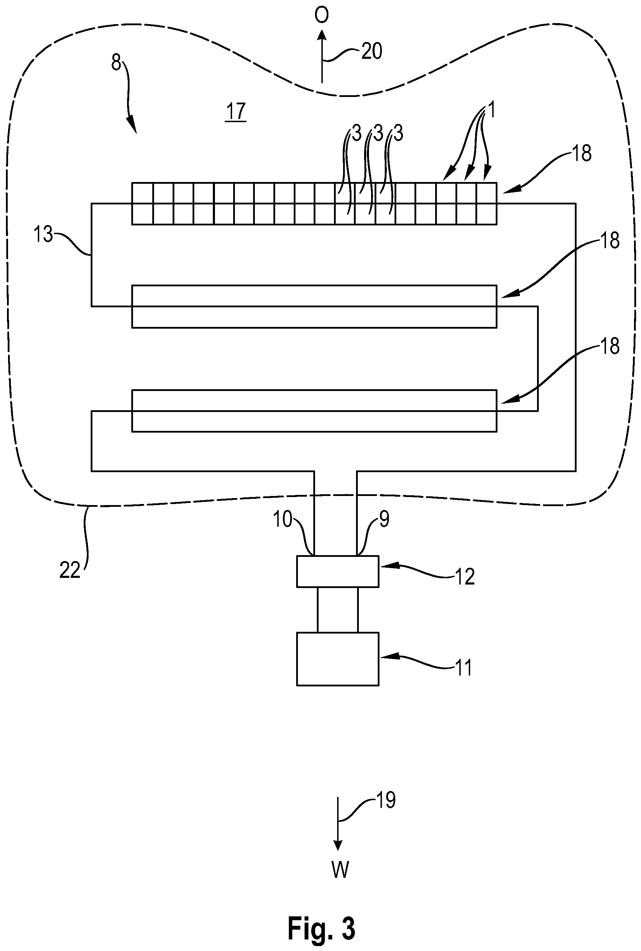

Ein Ausführungsbeispiel, das in den **Figuren 1 bis 2** dargestellt ist, zeigt ein erfindungsgemäßes Photovoltaikmodul **1,** wie es beispielsweise bei einer Photovoltaikanlage 8 zur Anwendung kommen kann, die in **Figur 3** gezeigt ist.

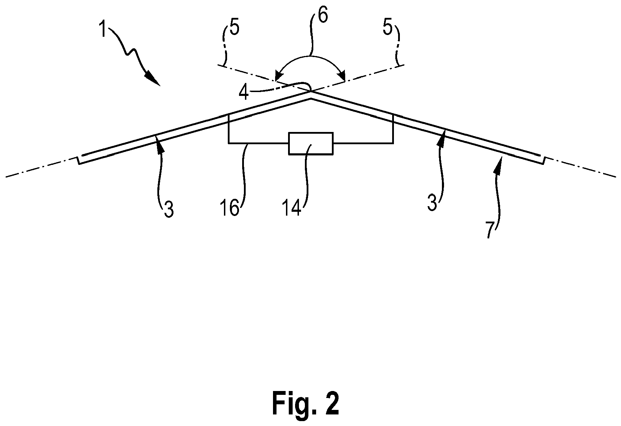

Das erfindungsgemäße Photovoltaikmodul **1** umfasst zwei baugleiche Modulteile **3,** welche über elektrische Leitungen **16** beispielsweise in Form von Kabeln elektrisch parallel mit einem Modulanschlusskasten **14** verbunden sind. Die Modulteile **3** sind in sich eben ausgebildet und - wie in **Figur 2** gezeigt - derart relativ zueinander angeordnet, dass Modulebenen **5** der beiden Modulteile **3** gemeinsam einen Winkel **6** von 150° einschließen. Die beiden Modulteile **3** sowie der Modulanschlusskasten **14** sind hierbei mittels eines einstückigen Rahmens **7** gemeinsam gelagert. Dabei ist das Photovoltaikmodul **1** einstückig und selbsttragend ausgebildet und somit derart auf einem Untergrund **17** aufstellbar, dass die Modulebenen **5** in einem Winkel von 15° zu dem Untergrund ausgerichtet sind. Vorzugsweise wird der Untergrund **17** hierbei von einem Flachdach eines Gebäudes gebildet.Jedes der Modulteile **3** umfasst 24 Photovoltaikzellen **2** in Form von Halbzellen mit Abmessungen von jeweils 156 mm × 78 mm. Dabei sind die Photovoltaikzellen **2** jeweils eines Modulteils **3** mittels elektrischer Leitungen **15** elektrisch in Reihe geschaltet. Die beiden Modulteile **3** sind mittels der elektrischen Leitungen **16** elektrisch parallel geschaltet, sodass das Photovoltaikmodul **1** insgesamt einen einzigen elektrischen Pluspol **9** und einen einzigen elektrischen Minuspol **10** aufweist. Die miteinander verschalteten Photovoltaikzellen **2** bilden gemeinsam einen Zellstring **21,** wobei sowohl die in Westrichtung als auch die in Ostrichtung ausgerichteten Photovoltaikzellen **2** dem Zellstring **21** zugeordnet sind **(****Figur 1****).**

Die Photovoltaikanlage **8,** welche in **Figur 3** dargestellt ist, umfasst eine Mehrzahl der erfindungsgemäßen Photovoltaikmodule **1,** welche ihrerseits jeweils zwei, in einem Winkel von 150° zueinander ausgerichtete Modulteile **3** aufweisen. Der Übersicht halber sind nicht alle der Photovoltaikmodule **1** gesondert dargestellt.

Die Photovoltaikmodule **1** sind entsprechend einer Größe des Untergrunds **17** in drei Gruppen **18** auf dem Flachdach angeordnet, wobei die einzelnen Photovoltaikmodule **1** einer Gruppe **18** im Wesentlichen aneinander anliegen. In dem vorliegenden Ausführungsbeispiel sind jeweils **18** Photovoltaikmodule **1** einer Gruppe **18** zugeordnet. Die einzelnen Gruppen **18** sind elektrisch mittels elektrischer Leitungen **13** miteinander verbunden. Die drei Gruppen **18** der Photovoltaikmodule **1** bilden gemeinsam einen Modulstring **22.**

Es ist vorgesehen, die Photovoltaikanlage **8** derart auf dem Flachdach des Gebäudes anzuordnen, dass eine Hälfte der Modulteile **3** zumindest im Wesentlichen in eine Westausrichtung **19** orientiert ist, während die andere Hälfte der Modulteile **3** zumindest im Wesentlichen in eine Ostausrichtung **20** orientiert ist.

Jeweils ein in Westausrichtung **19** orientiertes sowie ein Ostausrichtung **20** orientiertes Modulteil **3** sind paarweise elektrisch parallel geschaltet und bilden ein Photovoltaikmodul **1.** Die Photovoltaikmodule **1** sind untereinander mittels der elektrischen Leitungen **13** elektrisch in Reihe geschaltet, sodass die Photovoltaikanlage **8** insgesamt einen einzigen elektrischen Pluspol **9** und einen einzigen elektrischen Minuspol **10** aufweist.

Ferner weist die Photovoltaikanlage **8** einen Wechselrichter **11** mit einem MPP Tracker **12** auf, der elektrisch mit dem Pluspol **9** einerseits und dem Minuspol **10** andererseits verbunden ist. Mittels des Wechselrichters **11** lässt sich der bei Sonneneinstrahlung mittels der Photovoltaikzellen **2** erzeugte Gleichstrom in Wechselstrom umwandeln. Mittels des MPP Trackers **12** wird dabei in Abhängigkeit der Rahmenbedingungen, wie beispielsweise einer Bewölkung oder Temperaturschwankungen, ein maximaler Leistungspunkt der Photovoltaikanlage **8** ermittelt und ein Betriebspunkt der Photovoltaikanlage **8** entsprechend dem ermittelten maximalen Leistungspunkt eingestellt.

Zur Einspeisung des erzeugten Stroms ist der Wechselrichter **11** über nicht gesondert in der **Figur 3** gezeigte elektrische Leitungen mit einem Stromnetz eines zu versorgenden Gebäudes oder mit einem öffentlichen Stromnetz verbindbar.

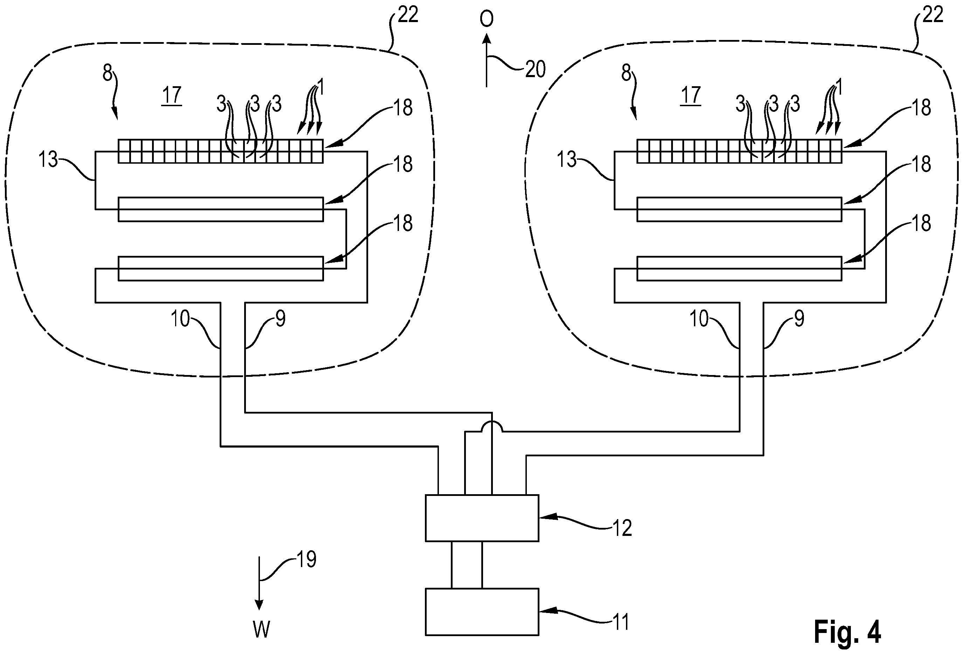

Die in der **Figur 4** dargestellte Photovoltaikanlage **108** zeigt zwei Modulstrings **22** der gleichen Art, wie diese in der **Figur 3** dargestellt sind. Die Photovoltaikanlage **108** ist ebenfalls auf einem Flachdach angeordnet und umfasst eine Mehrzahl der erfindungsgemäßen Photovoltaikmodule **1,** welche ihrerseits jeweils zwei, in einem Winkel von 150° zueinander ausgerichtete Modulteile **3** aufweisen. Der Übersicht halber sind nicht alle Modulteile **3** der Photovoltaikmodule **1** gesondert dargestellt. Die beiden Modulstrings **22** führen beide mit ihrem jeweiligen Pluspol **9** und Minuspol **10** zu demselben MPP Tracker **12.** Mittels des MPP Trackers **12** wird dabei in Abhängigkeit der Rahmenbedingungen ein maximaler Leistungspunkt der Photovoltaikanlage **8** ermittelt und ein Betriebspunkt der Photovoltaikanlage **108** entsprechend dem ermittelten maximalen Leistungspunkt eingestellt, wobei sich mittels der MPP Trackers **12** beiden Modulstrings **22** regeln lassen.

### Bezugszeichenliste

- 1: Photovoltaikmodul
- 2: Photovoltaikzelle
- 3: Modulteil
- 4: Mittelachse
- 5: Modulebene
- 6: Winkel
- 7: Rahmen
- 8: Photovoltaikanlage
- 9: Pluspol
- 10: Minuspol
- 11: Wechselrichter
- 12: MPP Tracker
- 13: Leitung
- 14: Modulanschlusskasten
- 15: Leitung
- 16: Leitung
- 17: Untergrund
- 18: Gruppe
- 19: Westausrichtung
- 20: Ostausrichtung
- 21: Zellstring
- 22: Modulstring

## Patentansprüche

1. Photovoltaikmodul (1) zur Umwandlung von Licht in elektrische Energie, umfassend eine Vielzahl von Photovoltaikzellen (2), wobei zumindest ein Teil der Photovoltaikzellen (2) elektrisch in Reihe geschaltet ist,
zwei Modulteile (3), die jeweils eine Mehrzahl von Photovoltaikzellen (2) umfassen,
wobei die Photovoltaikzellen (2) jeweils eines Modulteils (3) untereinander elektrisch in Reihe geschaltet sind und
wobei die beiden Modulteile (3) elektrisch parallel geschaltet sind, sodass das Photovoltaikmodul (1) insgesamt einen einzigen elektrischen Pluspol (9) und einen einzigen elektrischen Minuspol (10) aufweist,
wobei
die Modulteile (3) jeweils in sich eben sind, wobei die Modulteile (3) derart relativ zueinander angeordnet sind, dass diese einen Knick aufweisen, so dass die beiden Modulteile auf sich gegenüberliegenden Seiten de Knicks angeordnet sind und deren Modulebenen (5) (3) gemeinsam einen Winkel (6) zwischen 140° und 170° einschließen, wobei der Knick in eine von einem Untergrund abgewandte Richtung angeordnet ist,
wobei die beiden Modulteile unlösbar miteinander verbunden sind,
**dadurch gekennzeichnet, dass**
die Photovoltaikzellen eines jeweiligen Modulteils von Vollzellen oder von Halbzellen gebildet sind.

2. Photovoltaikmodul (1) nach Anspruch 1, **dadurch gekennzeichnet, dass** das Photovoltaikmodul (1) selbsttragend ausgeführt ist.

3. Photovoltaikmodul (1) nach einem der vorhergehenden Ansprüche, **dadurch gekennzeichnet, dass** die Modulteile (3) jeweils eine gleiche Anzahl von Photovoltaikzellen (2) umfassen.

4. Photovoltaikmodul (1) nach einem der vorhergehenden Ansprüche, **dadurch gekennzeichnet, dass** die Modulteile (3) entlang einer Mittelachse (4) des Photovoltaikmoduls (1) einander zugeordnet sind, vorzugsweise aneinander grenzen.

5. Photovoltaikmodul (1) nach Anspruch 4, **dadurch gekennzeichnet, dass** das Photovoltaikmodul (1) symmetrisch bezogen auf die Mittelachse (4) ausgebildet ist.

6. Photovoltaikmodul (1) nach einem der vorhergehenden Ansprüche, **dadurch gekennzeichnet, dass** der Winkel (6), den die beiden Modulteile (3) gemeinsam einschließen, in einem Bereich zwischen zwischen 150° und 160°, liegt.

7. Photovoltaikmodul (1) nach einem der vorhergehenden Ansprüche, **dadurch gekennzeichnet, dass** das Photovoltaikmodul (1) einteilig ausgestaltet ist.

8. Photovoltaikmodul (1) nach einem der vorhergehenden Ansprüche, **gekennzeichnet durch** einen einstückigen Rahmen (7), mittels dessen beide Modulteile (3) gemeinsam gelagert sind.

9. Auf eine Untergrund (17) installierte Photovoltaikanlage (8) umfassend eine Mehrzahl von Photovoltaikmodulen (1) gemäß einem der vorhergehenden Ansprüche,
wobei die Photovoltaikmodule (1) zwei Modulteile (3) aufweisen,
wobei die Photovoltaikmodule (1) einteilig ausgestaltet sind,
wobei die die einen Modulteile (3) der Photovoltaikmodule (1) zumindest im Wesentlichen in einer Westausrichtung und die anderen Modulteile (3) der Photovoltaikmodule (1) zumindest im Wesentlichen in einer Ostausrichtung orientiert sind,
wobei ein jeweilig in Westausrichtung orientiertes Modulteil (3) und das zugehörige in Ostausrichtung orientierte Modulteil (3) eines jeweiligen Photovoltaikmoduls (1) elektrisch parallel geschaltet sind,
wobei die Photovoltaikmodule (1) elektrisch in Reihe geschaltet sind, sodass die Photovoltaikanlage (1) insgesamt einen einzigen elektrischen Pluspol (9) und einen einzigen elektrischen Minuspol (10) aufweist.

10. Photovoltaikanlage (8) nach Anspruch 9, **gekennzeichnet durch** mindestens einen Wechselrichter (11) und mindestens einen MPP Tracker (12).

11. Photovoltaikanlage (8) nach Anspruch 9 oder 10, **dadurch gekennzeichnet, dass** benachbarte Photovoltaikmodule (1) der Photovoltaikanlage (8) mittels einer einzigen elektrischen Leitung (13) elektrisch miteinander verbunden sind.

12. Verfahren zum Betrieb einer Photovoltaikanlage (8),
wobei die Photovoltaikanlage (8) eine Mehrzahl von Photovoltaikmodulen (1) gemäß einem der vorgehenden Ansprüche umfasst, die zu gleichen Teilen zumindest im Wesentlichen in einer Westausrichtung und zumindest im Wesentlichen in einer Ostausrichtung orientiert sind,
wobei jeweils ein Modulteil (3) eines Photovoltaikmoduls (1) in die Westrichtung und ein anderes Modulteil (3) desselben Photovoltaikmoduls (1) in die Ostrichtung orientiert sind,
wobei die Modulteile (3) der jeweiligen Photovoltaikmodule (1) elektrisch parallel geschaltet sind,
wobei die Photovoltaikmodule (1) insgesamt elektrisch in Reihe geschaltet sind,
wobei
ein maximaler Leistungspunkt der Photovoltaikanlage (8) mittels eines einzigen MPP Trackers (12) ermittelt und ein Betriebspunkt der Photovoltaikanlage (8) entsprechend dem ermittelten maximalen Leistungspunkt eingestellt wird.

## Claims

1. A photovoltaic module (1) for converting light into electrical energy,
comprising a plurality of photovoltaic cells (2), wherein at least a portion of the photovoltaic cells (2) are electrically connected in series,
two module parts (3), which respectively comprise a plurality of photovoltaic cells (2),
wherein the photovoltaic cells (2) of each module part (3) are electrically connected in series with one another, and
wherein the two module parts (3) are electrically connected in parallel, so that the photovoltaic module (1) as a whole has a single positive electrical pole (9) and a single negative electrical pole (10),
wherein the module parts (3) themselves are respectively flat, wherein the module parts (3) are arranged relative to each other in such a manner that they exhibit a sharp bend, so that the two module parts are arranged on opposite sides of the bend and their module planes (5) (3) together form an angle (6) of between 140° and 170°, wherein the bend is arranged in a direction that faces away from a substrate,
wherein the two module parts are connected to each other in a permanent manner,
**characterized in that**
the photovoltaic cells of a respective module part are formed by full cells or by half cells.

2. The photovoltaic module (1) according to claim 1, **characterized in that** the photovoltaic module (1) is designed to be self-supporting.

3. The photovoltaic module (1) according to one of the preceding claims, **characterized in that** the module parts (3) respectively comprise an equal number of photovoltaic cells (2).

4. The photovoltaic module (1) according to one of the preceding claims, **characterized in that** the module parts (3) are associated with each other, preferably adjoin each other, along a central axis (4) of the photovoltaic module (1).

5. The photovoltaic module (1) according to claim 4, **characterized in that** the photovoltaic module (1) is symmetrical with respect to the central axis (4).

6. The photovoltaic module (1) according to one of the preceding claims, **characterized in that** the angle (6) that the two module parts (3) form together lies in a range between 150° and 160°.

7. The photovoltaic module (1) according to one of the preceding claims, **characterized in that** the photovoltaic module (1) is designed as one piece.

8. The photovoltaic module (1) according to one of the preceding claims, **characterized by** a one-piece frame (7) by means of which both module parts (3) are mounted together.

9. A photovoltaic system (8) installed on a substrate (17), comprising a plurality of photovoltaic modules (1) according to one of the preceding claims,
wherein the photovoltaic modules (1) comprise two module parts (3),
wherein the photovoltaic modules (1) are designed as one piece,
wherein in each photovoltaic module (1) the one module part (3) is oriented at least essentially in a westward direction and the other module part (3) of the photovoltaic modules (1) is oriented at least essentially in an eastward direction,
wherein a module part (3) oriented in a westward direction and the associated module part (3) oriented in an eastward direction of a photovoltaic module (1) are electrically connected in parallel,
wherein the photovoltaic modules (1) are electrically connected in series so that the photovoltaic system (1) as a whole has a single electrical positive pole (9) and a single electrical negative pole (10).

10. The photovoltaic system (8) according to claim 9, **characterized by** at least one inverter (11) and at least one MPP tracker (12).

11. The photovoltaic system (8) according to claim 9 or 10, **characterized in that** adjacent photovoltaic modules (1) of the photovoltaic system (8) are electrically connected to one another by means of a single electrical line (13).

12. A method for operating a photovoltaic system (8),
wherein the photovoltaic system (8) comprises a plurality of photovoltaic modules (1) according to one of the preceding claims, which are oriented in equal parts at least essentially in a westward direction and at least essentially in an eastward direction,
wherein respectively one module part (3) of a photovoltaic module (1) is oriented in the westward direction and another module part (3) of the same photovoltaic module (1) is oriented in the eastward direction,
wherein the module parts (3) of the respective photovoltaic modules (1) are electrically connected in parallel,
wherein the photovoltaic modules (1) as a whole are electrically connected in series,
wherein a maximum power point of the photovoltaic system (8) is determined by means of a single MPP tracker (12) and an operating point of the photovoltaic system (8) is set according to the determined maximum power point.

## Revendications

1. Module photovoltaïque (1) pour transformer de la lumière en énergie électrique,
comprenant une pluralité de cellules photovoltaïques (2), sachant au moins qu'une partie des cellules photovoltaïques (2) est connectée électriquement en série,
deux parties de module (3), qui comprennent respectivement une pluralité de cellules photovoltaïques (2),
sachant que les cellules photovoltaïques (2) respectivement d'une partie de module (3) sont connectées entre elles électriquement en série et
sachant que les deux parties de module (3) sont connectées électriquement en parallèle de telle manière que le module photovoltaïque (1) comporte au total un pôle positif électrique unique (9) et un pôle négatif électrique unique (10),
sachant que les parties de module (3) sont respectivement les mêmes, sachant que les parties de module (3) sont disposées l'une par rapport à l'autre de telle manière que celles-ci comportent un coude de telle sorte que les deux parties de modules sont disposées sur les côtés s'opposant du coude et les plans modulaires (5) (3) de celles-ci forment en commun un angle (6) se situant entre 140° et 170°, sachant que le coude est disposé dans une direction en éloignement d'un sol,
sachant que les deux parties de module sont reliées l'une à l'autre de façon inamovible,
**caractérisé en ce que**
les cellules photovoltaïques d'une partie de module respective sont formées de cellules pleines ou de demi-cellules.

2. Module photovoltaïque (1) selon la revendication 1, **caractérisé en ce que** le module photovoltaïque (1) est exécuté autoporteur.

3. Module photovoltaïque (1) selon l'une quelconque des revendications précédentes, **caractérisé en ce que** les parties de module (3) comprennent respectivement un nombre identique de cellules photovoltaïques (2).

4. Module photovoltaïque (1) selon l'une quelconque des revendications précédentes, **caractérisé en ce que** les parties de modules (3) sont attribuées l'une à l'autre le long d'un axe médian (4) du module photovoltaïque (1), sont de préférence en contact l'une avec l'autre.

5. Module photovoltaïque (1) selon la revendication 4, **caractérisé en ce que** le module photovoltaïque (1) est constitué de façon symétrique par rapport à l'axe médian (4) .

6. Module photovoltaïque (1) selon l'une quelconque des revendications précédentes, **caractérisé en ce que** l'angle (6) que les deux parties de modules (3) décrivent ensemble, se situe dans une plage entre 150° et 160°.

7. Module photovoltaïque (1) selon l'une quelconque des revendications précédentes, **caractérisé en ce que** le module photovoltaïque (1) est constitué en une partie.

8. Module photovoltaïque (1) selon l'une quelconque des revendications précédentes, **caractérisé par** un cadre en une pièce (7) au moyen duquel les deux parties de module (3) sont logées ensemble.

9. Installation photovoltaïque (8) installée sur un sol (17) comprenant une pluralité de modules photovoltaïques (1) selon l'une quelconque des revendications précédentes,
sachant que les modules photovoltaïques (1) comportent deux parties de module (3),
sachant que les modules photovoltaïques (1) sont constitués en une partie,
sachant que les parties de modules (3) des modules photovoltaïques (1) sont au moins pour l'essentiel orientées dans une orientation d'ouest et les autres parties de module (3) des modules photovoltaïques (1) sont orientées au moins pour l'essentiel dans une orientation d'est,
sachant qu'une partie de module (3) orientée respectivement dans une orientation d'ouest et la partie de module (3) correspondante orientée dans une orientation d'est d'un module photovoltaïque (1) respectif sont connectées électriquement en parallèle,
sachant que les modules photovoltaïques (1) sont connectés électriquement en série de telle manière que l'installation photovoltaïque (1) comporte au total un pôle positif électrique unique (9) et un pôle négatif électrique unique (10).

10. Installation photovoltaïque (8) selon la revendication 9, **caractérisée par** au moins un onduleur (11) et au moins un Suiveur de Point Maximum de Puissance (SPPM) (12) .

11. Installation photovoltaïque (8) selon la revendication 9 ou 10, **caractérisée en ce que** les modules photovoltaïques (1) voisins de l'installation photovoltaïque (8) sont reliés électriquement entre eux au moyen d'un conducteur électrique unique (13).

12. Procédé destiné à faire fonctionner une installation photovoltaïque (8),
sachant que l'installation photovoltaïque (8) comprend une pluralité de modules photovoltaïques (1) selon l'une quelconque des revendications précédentes, qui sont orientés pour les mêmes parties au moins pour l'essentiel dans une orientation d'ouest et au moins pour l'essentiel dans une orientation d'est,
sachant respectivement qu'une partie de module (3) d'un module photovoltaïque (1) est orientée dans la direction de l'ouest et une autre partie de module (3) du même module photovoltaïque (1) est orientée dans la direction de l'est,
sachant que les parties de modules (3) des modules photovoltaïques (1) respectifs sont connectées électriquement en parallèle,
sachant que les modules photovoltaïques (1) sont électriquement connectés au total en série,
sachant qu'un point de puissance maximal de l'installation photovoltaïque (8) est déterminé au moyen d'un Suiveur de Point Maximum de Puissance (SPPM) (12) et un point de fonctionnement de l'installation photovoltaïque (8) est réglé selon le point de puissance maximal déterminé.
